# EUROPÄISCHE PATENTSCHRIFT

(11) **EP 1 849 386 B1**
(45) Veröffentlichungstag und Bekanntmachung des Hinweises auf die Patenterteilung: **22.10.2008**
(21) Anmeldenummer: 07405103.8
(22) Anmeldetag: 28.03.2007
(51) Int. Cl.: A47J 31/40

(54) **Vorrichtung und Verfahren zur Zubereitung von Heissgetränken durch Aufbrühen einer partikelförmigen, mittels Wasser extrahierbaren Substanz**
Device and method for preparing hot drinks by brewing a substance in particles extracted using water
Dispositif et procédé de préparation de boissons chaudes par préparation d'une substance à particules extractibles avec de l'eau

(30) Priorität: 25.04.2006 CH 6862006
(43) Veröffentlichungstag der Anmeldung: 31.10.2007
(73) Patentinhaber: Imel AG, 5620 Wetzikon (CH)
(72) Erfinder: Frigeri, Patrizio, 8610 Uster (CH); Bunge, Rainer, Prof. Dr., 8057 Zürich (CH); Kälin, Roland, 8840 Einsiedeln (CH)
(74) Vertreter: Rottmann, Maximilian

(56) Entgegenhaltungen:
- WO-A-20/05117669
- JP-A- 5 292 884
- US-A- 3 357 339

## Beschreibung

Die Erfindung betrifft eine Vorrichtung zur Zubereitung von Heissgetränken durch Aufbrühen einer partikelförmigen, mittels Wasser extrahierbaren Substanz zur Zubereitung von Heissgetränken gemäss dem Oberbegriff des Anspruchs 1 sowie ein Verfahren zur Zubereitung von Heissgetränken gemäss dem Oberbegriff des Anspruchs 19.

Vorrichtungen der hier zur Rede stehenden Art dienen der vollautomatischen Zubereitung von Heissgetränken wie beispielsweise Espressokaffee. Als Espressokaffee wird ein Kaffeegetränk bezeichnet, bei dessen Zubereitung das Kaffeepulver vom Brühwasser unter Druck durchströmt wird. Für die Zubereitung einer Portion eines frischen Espressokaffees verfügen gattungsgemässe Vorrichtungen über ein Mahlwerk, mittels welchem die für die Zubereitung einer Kaffeegetränkeportion notwendige Menge an Kaffeebohnen jeweils frisch gemahlen werden kann. Die gemahlenen Kaffeebohnen werden dann als Kaffeepulver einer Brühkammer oder einem Brühraum chargenweise zugeführt, wo das Kaffeepulver zuerst verdichtet und danach von einer vordefinierten Menge Brühwasser unter Druck durchströmt und extrahiert wird.

Je nach Menge des Brühwassers, die zum Extrahieren des in der Brühkammer aufgenommenen Kaffeepulvers verwendet wird, kann eine sehr kleine bis eine sehr grosses Getränkeportion zubereitet und in ein entsprechende Gefäss eingeleitet werden. Die zum Zubereiten der jeweiligen Getränkeportion verwendete Menge an Substanz -Kaffeepulver- variiert, wenn überhaupt, nur in einem kleinen Rahmen, da das Volumen der Brühkammer vorbestimmt ist und nicht beliebig grosse bzw. unterschiedliche Mengen an Substanz bzw. Kaffeepulver aufnehmen kann. Das heisst mit anderen Worten, dass für einen sogenannten Espresso, für dessen Zubereitung üblicherweise deutlich weniger als 100ml Wasser verwendet werden, praktisch die selbe Menge an Kaffeepulver eingesetzt wird, wie für die Zubereitung eines sogenannt langen Kaffees, beispielsweise eines Milchkaffees, für dessen Zubereitung durchaus mehrere 100ml Wasser verwendet werden können. Zudem ist die maximale Menge an Brühwasser, die für die Zubereitung eines Getränks verwendet wird, beschränkt, da aus einer vorgegebenen Maximalmenge an aufzubrühender Substanz, nicht eine beliebig grosse Menge eines qualitativ hochwertigen, schmackhaften Kaffeegetränks zubereitet werden kann. Bei der Zubereitung eines solchen Kaffeegetränks nimmt der Anteil an löslichen Inhaltsstoffen, insbesondere Farb-, Geschmacks- und Aromastoffen, im Kaffeepulver sukzessive ab, was insbesondere bei der Zubereitung eines langen Kaffees als nachteilig empfunden wird, da das aus dem Getränkeauslass ausströmende Kaffeegetränk am Anfang des Zubreitungsprozesses eine dunkle bis schwarze Farbe aufweist, während gegen das Ende des Zubreitungsprozesses hin nur noch eine farblose Flüssigkeit aus dem Getränkeauslass ausströmt. Ein weiterer Nachteil besteht darin, dass sich mit zunehmender Extraktionsdauer der Geschmack des Getränks nachteilig verändern kann und die Menge an gelöstem Koffein erhöht wird.

Aus der JP05292884A ist eine Vorrichtung mit einem schräg gestellten Schneckenförderer bekannt, bei der das Kaffeepulver in einem kontinuierlichen Gegenstrom-Verfahren extrahiert wird. Das Wasser wird dabei am höchsten Punkt des Förderers zugeführt und strömt danach durch eine Rinne des Förderers von oben nach unten, während das Kaffeepulver mittels der Schnecke nach oben gefördert wird. Die beschriebene Vorrichtung arbeitet vollkommen drucklos und entspricht in etwa der Filtration von "langem" oder auch "amerikanischem" Kaffee. Die Filtrationszeit ist durch die Länge der Förderschnecke fest vorgegeben und kann nicht variiert werden. Bei dem mit einer solchen Vorrichtung durchgeführten Verfahren bekommt der Kaffee einen bitteren Geschmack und auch ungesunde Begleitstoffe wie z.B. Koffein werden in hohem Masse ausgebrüht.

In der US 3,357,339 ist eine automatische Kaffeemaschine zur kontinuierlichen Herstellung von Kaffee beschrieben. Das zu extrahierende Kaffeepulver ist in einem geschlossenen, schlauchartigen Band aufgenommen, welches aus einem wasserdurchlässigen Filtermaterial besteht. Zur Herstellung eines Kaffeegetränks wird das Band kontinuierlich durch eine Brühkammer hindurchgeführt, wo mittels eines oberhalb des Bands angeordneten Sprühkopfs heisses Wasser fein verteilt wird, so dass das Band mitsamt dem Inhalt benetzt wird. Das benetzte Band wird danach zwischen zwei Auspressrollen hindurchgeführt, wodurch das Kaffeepulver ausgepresst und extrahiert wird. Unter den beiden Auspressrollen ist ein trichterartiges Abflusselement angeordnet, über welches das Kaffeegetränk einem Behälter zugeführt werden kann.

Schliesslich ist in der WO 2005/117669 ein Verfahren und eine Vorrichtung, namentlich eine Kaffeemaschine, zur Herstellung einer einzelnen Genussmenge eines Getränks beschrieben. Gemäss einem ersten Ausführungsbeispiel weist die Kaffeemaschine u.a. einen Bohnenbehälter, ein darunter angeordnetes Mahlwerk, eine Zuführungseinrichtung sowie einen Mahlgutträger in Form eines umlaufenden, wasserdurchlässigen Förderbandes auf. Der Mahlgutträger fördert das gemahlene Kaffeepulver in einen Extraktionsbereich, in dem das Förderband von einer Filterplatte gestützt wird. Im Extraktionsbereich wird das Kaffeepulver einerseits mittels eines Kompressionsbands verdichtet, und andererseits wird heisses Wasser zum Extrahieren des Kaffeepulvers zugeführt. Das Kompressionsband ist in Förderrichtung leicht zum Förderband hin geneigt, so dass die Kompression des Kaffeepulvers zunehmend ist. Das extrahierte Kaffeepulver wird mittels des Förderbands in einen Abfallbehälter überführt. Mit dieser Vorrichtung soll die kontinuierliche Zubereitung eines Kaffeegetränks ermöglicht werden. Bei einem alternativen Ausführungsbeispiel wird vorgeschlagen, als Fördermittel zwei Förderbänder vorzusehen, die mit einer Vielzahl von Trennwänden versehen sind. Die beiden Förderbänder laufen zwischen zwei Platten durch den Extraktionsbereich hindurch. Durch die Trennwände sollen Kammern zur Aufnahme des Aromaträgers -Kaffeepulver- und zum Extrahieren desselben gebildet werden. Bei einigen weiteren Ausführungsbeispielen ist das Förderorgan als Förderschnecke ausgebildet, welche jeweils mit einem Wendel mit konstanter Steigung versehen ist. Im einen Beispiel wird zur Schaffung von diskreten Kammern, in welchen der Aromaträger aufgenommen werden kann, eine mit Schlitzen versehene Raupe vorgeschlagen, welche in Eingriff mit dem Wendel der Förderschnecke steht. In einem anderen Beispiel wird eine Doppelschnecke vorgeschlagen, deren Wendel zur Schaffung der diskreten Kammern gegenseitig im Eingriff stehen. Schliesslich werden auch noch Förderschnecken vorgeschlagen, deren Kern sich im Durchmesser verändert, namentlich zu einem Verdichtungskegel aufweitet. Dadurch soll der schraubenförmige Raum zwischen dem Kern, dem Wendel und der die Förderschnecke umschliessenden Rohrwandung verengt werden, so dass ein mittels der Förderschnecke geförderter Aromaträger in Förderrichtung verdichtet wird. Sofern die Verdichtung vor dem Extraktionsbereich stattfindet, soll eine Dichtstelle geschaffen werden, welche verhindert, dass der Aromaträger vor der Dichtstelle benetzt wird. Wenn die Verdichtung nach Extraktionsbereich erfolgt, kann der Aromaträger dadurch ausgepresst werden. Auch in diesen Beispielen weist der Wendel immer eine konstante Steigung auf.

Die Erfindung zielt darauf ab, eine Vorrichtung zur Zubereitung von Heissgetränken durch Aufbrühen einer partikelförmigen, mittels Wasser extrahierbaren Substanz derart weiterzubilden, dass die Menge bzw. das Volumen einer zuzubereitenden Getränkeportion in einem weiten Bereich frei wählbar ist, wobei die Vorrichtung einfach aufgebaut und sich zur Zubereitung eines qualitativ hochwertigen Getränks eignen soll.

Hierzu wird nach der Erfindung eine Vorrichtung gemäss dem Anspruch 1 vorgeschlagen.

Indem sich die Schneckenwelle zumindest entlang der Brühzone sowie der Auspresszone erstreckt und die Steigung des Schneckenflügels im Bereich der Auspresszone kleiner ist, als im Bereich der Brühzone, kann auf besonders vorteilhafte Weise das Verdichten des Kaffeepulvers in der Auspresszone und das Auspressen des Extrakts bewerkstelligt werden.

Bevorzugte Weiterbildungen der Vorrichtung werden in den abhängigen Ansprüchen 2 bis 19 näher umschrieben.

So wird in einem bevorzugten Ausführungsbeispiel vorgeschlagen, dass die Vorrichtung eine Einzugszone aufweist, in der sich das die Schneckenwelle umschliessende Gehäuse konisch verengt, wobei die Schneckenwelle einen der Kontur der Einzugszone angepassten Einzugsbereich aufweist. Damit wird die grundsätzliche Voraussetzung geschaffen, dass die Förderleistung der Schneckenwelle durch axiales Verschieben relativ zum Gehäuse verändert werden kann.

Im Anspruch 20 wird zudem ein Verfahren zur Zubereitung von Heissgetränken durch Aufbrühen einer partikelförmigen, mittels Wasser extrahierbaren Substanz beansprucht. Bevorzugte Ausführungsbeispiele des Verfahrens sind in den abhängigen Ansprüchen 21 bis 29 näher umschrieben.

Ausführungsbeispiele der Erfindung werden nachfolgend anhand von Zeichnungen näher erläutert. Dabei zeigt:
- Fig. 1: eine Vorrichtung zur Zubereitung von Heissgetränken in schematischer Darstellung;
- Fig. 2: einen vergrösserten Ausschnitt aus der Fig. 1;
- Fig. 3: eine nicht erfindungsgemäße Vorrichtung;
- Fig. 4: eine nicht erfindungsgemäße Vorrichtung;
- Fig. 5: die Vorrichtung gemäss Fig. 4 mit axial verschobenem Förderorgan, und
- Fig. 6: eine bevorzugte Schneckenflügelgeometrie im Querschnitt.

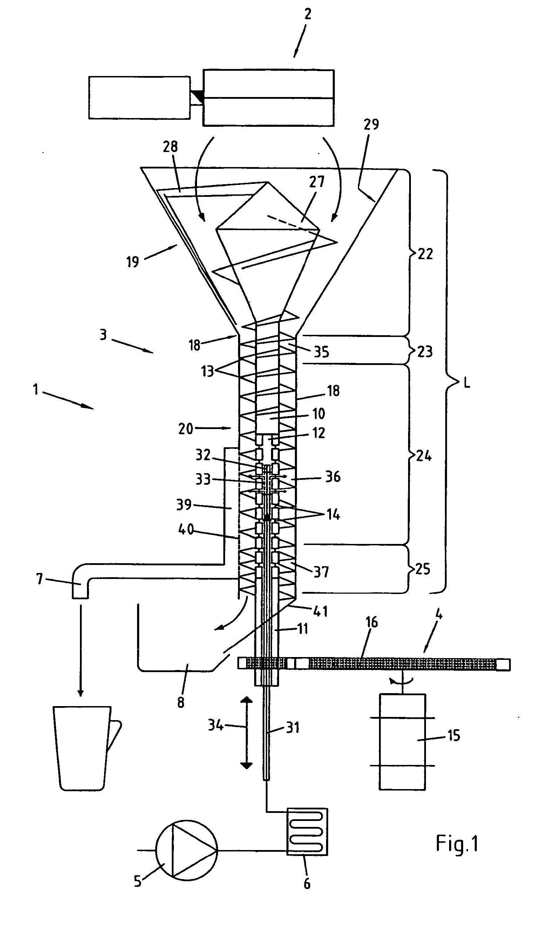

In der Fig. 1 ist eine Vorrichtung zur Zubereitung von Heissgetränken durch Aufbrühen einer partikelförmigen, mittels Wasser extrahierbaren Substanz schematisch dargestellt. Im vorliegenden Fall ist die Vorrichtung beispielhaft als Kaffeemaschine zur Zubereitung von Espressokaffee ausgebildet, bei der das Kaffeepulver vom Brühwasser unter Druck durchströmt und dabei extrahiert wird.

Die gezeigte Vorrichtung 1 umfasst ein Mahlwerk 2, eine Brüheinrichtung 3, eine Antriebsvorrichtung 4, eine Förderpumpe 5, einen Wassererhitzer 6, einen Getränkeauslass 7 sowie einen Sammelbehälter 8 für extrahiertes Kaffeepulver. Der Wassererhitzer 6 ist vorzugsweise als Durchlauferhitzer ausgebildet, wobei natürlich auch ein Boiler zum Einsatz kommen kann. Die Vorrichtung 1 umfasst im weiteren einen Vorratsbehälter für Kaffeebohnen, der jedoch zugunsten einer übersichtlich Darstellung nicht eingezeichnet ist. Eine Frischwasserquelle zur Entnahme des Brühwassers ist ebenfalls nicht eingezeichnet.

Das Herzstück der Vorrichtung 1 bildet die Brüheinrichtung 3. Diese umfasst eine hohle Schneckenwelle 10, die drehbar in einem Gehäuse 18 angeordnet ist, wobei der eigentliche Schneckenwellenkörper 11 über das Gehäuse 18 hinaus verlängert ist. Als Antrieb der Schneckenwelle 10 dient die Antriebsvorrichtung 4, die aus einem Antriebsmotor 15 sowie einem mit der Schneckenwelle 10 verbundenen Getriebe 16 besteht, das mit dem über das Gehäuse 18 hinaus verlängerten Bereich des Schneckenwellenkörpers 11 verbunden ist. Das Gehäuse 18 besteht aus einem trichterförmigen Einlassbereich 19 sowie einem zylindrischen Abschnitt 20, wobei das Gehäuse 18 bzw. die Schneckenwelle 10 über die Länge L in verschiedene Zonen 22, 23, 24, 25 unterteilt ist, die nachfolgend noch näher erläutert werden.

Das Förderorgan in Form der Schneckenwelle 10 ist mit einem als Förderelement für das Kaffeepulver dienenden Schneckenflügel 13 versehen, der in axialer Richtung, d.h. in Förderrichtung, unterschiedliche Steigungen zur Schaffung von zumindest drei unterschiedlichen Zonen 23, 24, 25 entlang des zylindrischen Gehäuseabschnitts 20 aufweist. Im Bereich des trichterförmigen Einlassbereichs 19 ist die Schneckenwelle 10 mit einem verbreiterten, in der Form eines Doppelkegels ausgebildeten Anfangsbereich 27 versehen, an dem ein radial abstehendes Abstreiforgan 28 angeordnet ist, welches bei sich drehender Schneckenwelle 10 dem inneren Rand 29 des trichterförmigen Einlassbereichs 19 entlangstreift. Zur Bildung einer Einzugszone 22 besitzt der Schneckenflügel 13 am Anfang, d.h. im trichterförmigen Einlassbereich 19, eine grosse Steigung, um das von dem Mahlwerk 2 in den Einlassbereich 19 beförderte Kaffeepulver mit grossem Vorschub in Richtung des zylindrischen Gehäuseabschnitts 20 zu fördern. Am Anfang des zylindrischen Gehäuseabschnitts 20 weist der Schneckenflügel 13 der Schneckenwelle 10 zur Bildung einer Abdichtzone 23 eine geringe Steigung auf. Diese Abdichtzone erstreckt sich vorzugsweise über eine bis drei Schneckenwindungen. Das Kaffeepulver wird durch den Schneckenflügel 13 in dieser Abdichtzone 23 stark komprimiert. Auf die Abdichtzone 23 folgt die eigentliche Brühzone 24, in der der Schneckenflügel 13 der Schneckenwelle 10 eine gegenüber der Abdichtzone 23 grössere Steigung aufweist, so dass sich das Kaffeepulver in dieser Brühzone 24 wieder etwas entspannen kann. An die Brühzone 24 schliesst sich auslassseitig die Auspresszone 25 an, in der der Schneckenflügel 13 der Schneckenwelle 10 wiederum eine gegenüber der Brühzone 24 kleinere Steigung aufweist. Durch die kleinere Steigung des Schneckenflügels 13 wird das bereits teilextrahierte Kaffeepulver in der Auspresszone 25 zusätzlich verdichtet. Durch dieses Verdichten des Kaffeepulvers wird einerseits ein zusätzliches Extrahieren des Kaffeepulvers bewirkt und andererseits eine Abdichtung für das den Brühraum 36 durchströmende Brühwasser geschaffen wird, so dass die Brühzone 24 auslassseitig abgedichtet wird.

Zwischen der Innenseite des Gehäuses 18 und dem Schneckenwellenkörper 11 werden entlang der drei genannten Zonen 23, 24, 25 ein Abdichtraum 35, ein Brühraum 36 sowie ein Auspressraum 37 gebildet.

Das Volumen des für die eigentliche Extraktion des Kaffeepulvers vorgesehenen Brühraums 36 ist derart gewählt, dass nur ein Bruchteil der zum Aufbrühen einer Portion eines Getränks benötigten Menge an Substanz -Kaffeepulver- darin aufgenommen werden kann. Zur Zubereitung einer Kaffeeportion, namentlich einer kleinen Tasse Espresso oder einer herkömmlichen Tasse Kaffee, werden üblicherweise ca. 7 bis 9 Gramm Kaffeepulver verwendet. Der Brühraum 36 ist daher vorzugsweise zur Aufnahme von ca. 1.5 bis maximal 3 Gramm Kaffeepulver ausgebildet. Das Vorsehen eines vergleichsweise kleinen Brühraums hat u.a. den Vorteil, dass ein gleichmässiges Extrahieren des im Brühraum aufgenommenen Kaffeepulvers sichergestellt werden kann. Die weiteren Vorteile, die ein kleinvolumiger Brühraum mit sich bringt, werden nachfolgend noch näher erläutert.

Der Auslass des Wassererhitzers 6 ist mit einer Brühwasserleitung 31 verbunden, die in den hohlen Innenraum 12 der Schneckenwelle 10 führt und im Endbereich 32 mit mehreren radialen Auslässen 33 versehen ist, über welche Brühwasser aus der Leitung 31 in den Innenraum 12 der Schneckenwelle 10 einströmen kann. Der hohle Schneckenwellenkörper 11 ist mit radialen Durchlässen 14 versehen, welche vorzugsweise als Bohrungen ausgebildet sind und entlang der Brühzone 24 sowie der Auspresszone 25 angeordnet sind und von dem hohlen Innenraum 12 der Schneckenwelle 10 zu der äusseren Mantelfläche der Schneckenwelle 10 führen und den Innenraum 12 der Schneckenwelle 10 mit dem eigentlichen Brühraum 36 verbinden, so dass das mittels der Pumpe 5 geförderte und vom Wassererhitzer 6 erhitzte Brühwasser über die Brühwasserleitung 31 in den Innenraum 12 der Schneckenwelle 10 und von dort über die radialen Durchlässe 14 im Schneckenwellenkörper 11 radial, d.h. quer zur Förderrichtung, in den Brühraum 36 einströmen kann. Die Brühwasserleitung 31 ist in axialer Richtung relativ zu der Schneckenwelle 10 verschiebbar, wie dies durch einen Doppelpfeil 34 angedeutet ist. Durch ein axiales Verschieben der Brühwasserleitung 31 kann das Brühwasser ggf. an unterschiedlichen Stellen in den Brühraum 36 eingeleitet werden. Das Brühwasser wird vorzugsweise mit einem Druck von ca. 5 bis 20 bar in die Brühzone 24 bzw. den Brühraum 36 eingeleitet. Durch das Verdichten des Kaffeepulvers in der auslassseitigen Auspresszone. 25 herrscht in diesem Abschnitt üblicherweise ein höherer hydrostatischer Druck als in der Brühzone 24 bzw. im Brühraum 36. Das Zuführen des Brühwassers im Bereich der Brühzone 24 hat der Vorteil, dass in dieser Zone das Kaffeepulver kaum bzw. nur gering verdichtet ist. Daher kann das Brühwasser in Bereich der Brühzone 24 ggf. weitgehend drucklos bzw. mit einem geringen Überdruck zugeführt werden. Anders verhält es sich, wenn das Brühwasser in einem Bereich zugeführt wird, in dem das Kaffeepulver hoch verdichtet ist. In diesem Fall muss das Brühwasser zwingend unter relativ hohem Druck in das Kaffeepulver eingeleitet werden, damit eine effiziente und vollständige Benetzung des Kaffeepulvers gewährleistet werden kann.

Der Durchmesser der radialen Durchlässe 14 ist vorzugsweise so gewählt, dass er kleiner ist als der statistische Mittelwert des Durchmessers eines einzelnen Partikels des Kaffeepulvers. Dadurch kann verhindert werden, dass die einzelnen Kaffeepartikel in den Innenraum 12 der Schneckenwelle 10 eindringen können. Ggf. können auch radiale Kanäle mit grösserem Durchmesser vorgesehen werden, wobei in diesem Fall die Kanäle vorzugsweise von einem engmaschigen Filter überdeckt werden sollten, wie sie schon heute Stand der Technik sind in der Kaffeefiltration.

Das Gehäuse 18 ist auf der dem Getränkeauslass 7 zugewandten Seite mit einem Sammelabschnitt 39 versehen, der auf der zur Schneckenwelle 10 gerichteten Innenseite mit einem filterartigen Wandteil 40 versehen ist, welcher die Schneckenwelle 10 zumindest teilweise umgibt und über welchen das frisch aufgebrühte Kaffeegetränk radial aus dem Brühraum 36 austreten kann. Der filterartige Wandteil 40 kann als herkömmliches, gekrümmtes Lochblech ausgeführt sein. Anstelle eines Lochblechs kann beispielsweise auch ein Keramikfilter oder ein sogenannter Federfilter zum Einsatz kommen. Das extrahierte Kaffeepulver wird am Ende axial aus dem Gehäuse 18 ausgestossen und mittels eines Leitblechs 41 in den Sammelbehälter 8 geleitet.

Vorzugsweise ist die Vorrichtung mit einem Ventil versehen, mittels welchem nach der Zubereitung einer Kaffeeportion bzw. zwischen der Zubereitung von zwei Kaffeeportionen ein Ausströmen bzw. "Nachtropfen" von Kaffee aus dem Getränkeauslass unterbunden werden kann.

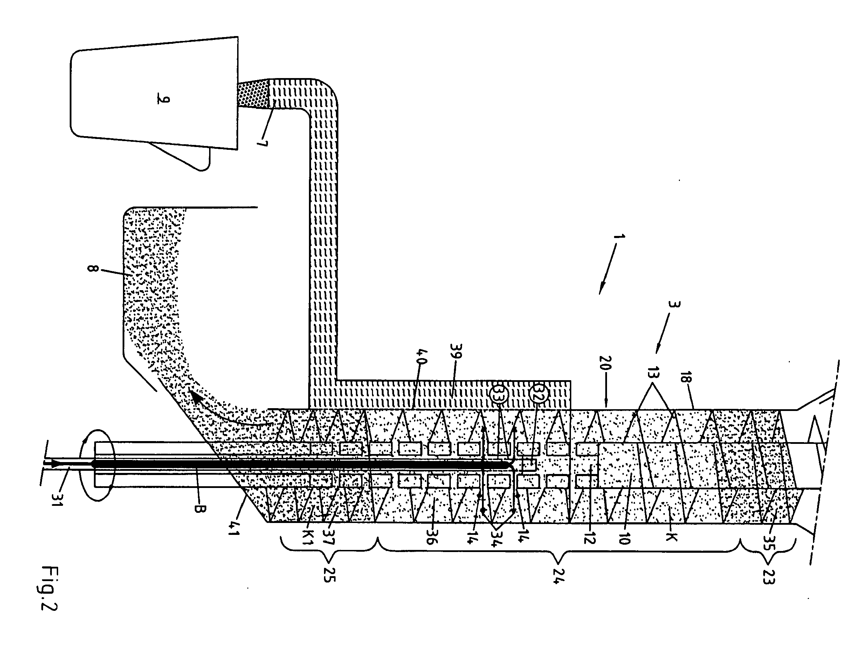

Anhand der Fig. 2, welche einen vergrösserten Ausschnitt der Vorrichtung im Bereich des zylindrischen Gehäuseabschnitts 20 zeigt, wird der eigentliche Getränkezubereitungsprozess näher erläutert. Es wird im vorliegenden Fall davon ausgegangen, dass sich zu Beginn des Zubereitungsprozesses kein Kaffeepulver im Gehäuse 18 bzw. in den verschiedenen Zonen 22, 23, 23, 24 befindet. Der Zubereitungsprozess beginnt durch Mahlen von frischen Kaffeebohnen mittels des Mahlwerks. Das Kaffeepulver wird über nicht näher dargestellte Mittel in den trichterförmigen Einlassbereich befördert, wo es von dem Schneckenflügel 13 der sich drehenden Schneckenwelle 10 erfasst und in den zylindrischen Gehäuseabschnitt 20 gefördert wird. Sobald das Kaffeepulver K von der Schneckenwelle 10 bis zu der auslassseitigen Auspresszone 25 gefördert ist, bzw. der Auspressraum 37 mit hoch verdichtetem Kaffeepulver K1 gefüllt ist, kann der Brühvorgang gestartet werden, da der Brühraum 36 durch das sich in der Abdichtzone 23 wie auch in der Auspresszone 25 hochverdichtete Kaffeepulver in axialer Richtung beidseitig abgedichtet ist. Bei sich drehender Welle 10 wird Brühwasser B mit einer Temperatur von ca. 90 bis 95°C und einem Druck von ca. 5 bis 20 bar über die Brühwasserleitung 31 zugeführt. Das Brühwasser B strömt im Endbereich 32 der Brühwasserleitung 31 über die radialen Auslässe 33 in den Innenraum 12 der Schneckenwelle 10 und von dort über die radialen Durchlässe 14 im Schneckenwellenkörper 11 in den Brühraum 36, wie dies durch Pfeile 34 angedeutet ist. Das Brühwasser verteilt sich im Brühraum 36, wobei es durch das stark komprimierte Kaffeepulver in der Abdichtzone 23 bzw. der Auspresszone 25 daran gehindert wird, in axialer Richtung nennenswert in die Abdichtzone 23 bzw. Auspresszone 25 einzudringen. Allerdings kann das Brühwasser in axialer Richtung nach oben in Richtung der Abdichtzone 23 strömen und das sich im oberen bzw. einlassseitigen Bereich der Brühzone 24 befindliche Kaffeepulver K zumindest benetzen, wodurch das Kaffeepulver K in diesem Bereich aufquellen kann und eine Art Vorbrühphase eingeleitet wird, was Vorteile hinsichtlich des Geschmacks des zuzubereitenden Getränks mit sich bringt. Durch das sich in axialer Richtung kontinuierlich durch den Brühraum 36 hindurchbewegende Kaffeepulver K wird bewirkt, dass das radial in den Brühraum 36 eingeleitete Brühwasser den Brühraum 36 nicht absolut radial, sondern vielmehr schräg durchströmt.

Das über die Brühwasserleitung 31 zugeführte Brühwasser B durchströmt den Brühraum 36 und damit auch das Kaffeepulver K im wesentlichen radial, um dann in der Form von flüssigem Kaffeeextrakt über den filterartigen Wandteil 40 in den Sammelabschnitt 39 einzutreten und als frisch aufgebrühtes Kaffeegetränk über den Getränkeauslass 7 in ein darunter befindliches Gefäss 9 einzuströmen. Die Drehgeschwindigkeit der Schneckenwelle 10 wird vorzugsweise so gewählt, dass der jeweilige Kaffeepulveranteil gesamthaft während ca. 25-30 Sekunden extrahiert wird. Kurz bevor die gewünschte Menge des Kaffeegetränks zubereitet ist, wird zuerst der Mahlvorgang unterbrochen und danach, d.h. nach einem vorbestimmten Zeitintervall, die Brühwasserzufuhr gestoppt. Um eine optimale Nutzung des gemahlenen Kaffeepulvers zu erreichen, wird die Brühwasserzufuhr in den Brühraum 36 vorzugsweise erst dann gestoppt, wenn kein Kaffeepulver mehr im trichterförmigen Einlassbereich vorhanden ist. Allerdings sollte sichergestellt werden, dass bis zum Stoppen der Brühwasserzufuhr noch genügend komprimiertes Kaffeepulver in der Abdichtzone vorhanden ist, damit die einlassseitige Abdichtung des Brühraums 36 bis zum Ende des Aufbrühvorgangs sichergestellt ist. Vorzugsweise dreht sich die Schneckenwelle 10 nach dem Stoppen der Brühwasserzufuhr noch solange weiter, bis sämtliches Kaffeepulver aus dem zylindrischen Gehäuseabschnitt 20 entfernt ist und sich kein Kaffeepulver mehr in den einzelnen Zonen 23, 24, 25 der Brüheinrichtung 3 befindet. Da das Volumen des Brühraums 36 und insbesondere des angrenzenden Abdichtraums 35 relativ klein gewählt ist, wird allenfalls nur eine sehr kleine Menge an ungenutztem, d.h. nicht extrahiertem Kaffeepulver aus dem Abdichtraum 35 und ggf. dem Brühraum 36 entfernt. Ggf. kann mit dem Entfernen des Kaffeepulvers aus dem zylindrischen Gehäuseabschnitt 20 nach dem Stoppen der Brühwasserzufuhr auch ein vorbestimmte Zeitdauer zugewartet werden, da bei kurz aufeinanderfolgenden Zubereitungszyklen das Kaffeepulver jeweils nicht aus dem zylindrischen Gehäuseabschnitt 20 entfernt zu werden braucht, sondern aus hygienischen Gründen erst dann, wenn während einer bestimmten Zeitdauer von beispielsweise einigen Minuten kein Kaffeegetränk mehr zubereitet wird.

Das Verdichten des teilextrahierten Kaffeepulvers in der Auspresszone 25 hat den Vorteil, dass das Kaffeepulver dadurch zusätzlich extrahiert wird, indem die Flüssigkeit aus dem Kaffeepulver ausgepresst wird. Durch das Verdichten des Kaffeepulvers in der Auspresszone 25 wird somit einerseits das auslassseitige Abdichten des Brühraums sichergestellt und andererseits die Extraktion des Kaffeepulvers verbessert. Am austrittsseitigen Ende wird das ausgepresste Kaffeepulver von dem Leitblech 41 in den Sammelbehälters 8 abgelenkt.

Mit der erfindungsgemässen Vorrichtung lassen sich einerseits grosse Mengen eines hochwertigen Kaffeegetränks in einem kontinuierlichen Brühvorgang zubereiten, wobei das Volumen, d.h. die Menge des zuzubereitenden Kaffeegetränks in einem sehr weiten Bereich variierbar ist. Gleichzeitig kann natürlich auch die Pulvermenge, die zur Zubereitung der jeweiligen Getränkeportion extrahiert wird, an die Wassermenge angepasst werden. So ist es mit der Vorrichtung beispielsweise möglich, einen sehr kleinen Espresso mit einem Volumen von wenigen Millilitern zuzubereiten. Andererseits können mit dieser Vorrichtung in einem kontinuierlichen Zubereitungsprozess auch mehrere Liter frischen Espressokaffees zubereitet werden, wobei in jedem Fall, d.h. unabhängig von der Menge des hergestellten Heissgetränks, die Stärke des Kaffees in einem weiten Bereich frei wählbar ist.

Durch das Verändern verschiedener Parameter kann zudem Einfluss auf das zubereitete Heissgetränk genommen werden. Neben den auch bei anderen gattungsgemässen Vorrichtungen veränderbaren Parametern wie beispielsweise Mahlgrad bzw. Korngrösse des Kaffeepulvers, Verdichtungsgrad des Kaffeepulvers, Extraktionsdauer, Brühwassertemperatur und Brühwasserdruck sind bei der erfindungsgemässen Vorrichtung noch weitere Betriebs-Parameter veränderbar. Beispielsweise kann durch Verändern der Drehgeschwindigkeit der Schneckenwelle der Extraktionsgrad des Kaffeepulvers und damit der Geschmack, die Stärke, der Koffeingehalt sowie ggf. das Aussehen des fertigen Kaffeegetränks verändert werden. Durch die axiale Verstellbarkeit der Brühwasserleitung 31 kann zudem bestimmt werden, in welchem Bereich der Brühzone das Brühwasser in das Kaffeepulver eingeleitet werden soll. Dies macht insbesondere auch dann Sinn, wenn der Schneckenflügel 13 der Schneckenwelle 10 entlang der Brühzone eine unterschiedliche Steigung aufweist. In diesem Fall kann durch axiales Verschieben der Brühwasserleitung 31 das Brühwasser an Stellen in den Brühraum 36 eingeleitet werden, in denen das Kaffeepulver unterschiedlich stark verdichtet ist. Die Position der Wasserbeigabe beeinflusst die Qualität des Kaffeegetränks aufgrund unterschiedlicher Verdichtung des Kaffeepulvers und der Extraktionszeit. Aufgrund der Position des Filtrationssiebes und der Brühwasserbeigabe zueinander kann der Filtrationsweg, und damit auch die Filtrationszeit, beeinflusst werden.

Ein weiterer Vorteil der hier beschriebenen Vorrichtung gegenüber den nach dem Stand der Technik ausgebildeten, chargenweise arbeitenden Vorrichtung besteht darin, dass das Kaffeepulver während des ganzen Zubereitungsprozesses gleichmässig extrahiert wird, d.h. das aus dem Getränkeauslass strömende Kaffeegetränk hat immer eine einheitliche Farbe, einen einheitlichen Geschmack und ein einheitliches Aroma. Die Menge an zubereitetem Kaffeegetränk ist zudem unabhängig von der Grösse des Brühraums. Ein weiterer nennenswerter Vorteil dieser Vorrichtung besteht darin, dass der eigentliche Zubereitungsprozess vergleichsweise wenig Zeit in Anspruch nimmt, da im Gegensatz zu herkömmlichen Kaffeemaschinen nicht zuerst die gesamte Menge an Kaffeebohnen gemahlen werden muss, die für die Zubereitung einer Getränkeportion benötigt wird, sondern nur diejenige Menge an Kaffeepulver bereit gestellt werden muss, die zum Füllen des Brühraums 36 sowie der beiden angrenzenden Räume 36, 37 notwendig ist. Bei der Zubereitung von mehreren Getränkeportionen innerhalb von kurzen Zeitabständen entfällt die "Füllzeit" komplett, da in diesem Fall praktisch kontinuierlich gearbeitet werden kann, indem nach der Zubereitung einer Getränkeportion nur die Brühwasserzufuhr kurz unterbrochen werden muss, ohne dass das Kaffeepulver vollständig aus dem Brühraum 36 sowie dem einlassseitigen Abdichtraum 35 entfernt zu werden braucht.

Ggf. kann die Schneckenwelle nach dem Stoppen der Brühwasserzufuhr noch einige wenige Umdrehungen ausführen, damit das ggf. schon benetzte Kaffeepulver aus dem Brühraum entfernt wird und der Brühraum gleichzeitig mit frischem Kaffeepulver gefüllt wird. Zudem entfällt bei der Zubereitung von mehreren Getränkeportionen in kurzen Zeitabständen auch die Totzeit zum Ausstossen des ausgelaugten Kaffeekuchens am Ende des jeweiligen Zubereitungsprozesses, da das Ausstossen des ausgelaugten Kaffeekuchens bereits während des Zubereitungsprozesses kontinuierlich erfolgt. Demzufolge kann bei der Zubereitung von mehreren Getränkeportionen innerhalb von kurzen Zeitabständen die bei chargenweise arbeitenden Vorrichtungen notwendige Füllzeit bzw. Ausstosszeit entfallen. Daher kann mit der erfindungsgemässen Vorrichtung im Vergleich mit den bekannten Vorrichtungen eine wesentlich höhere "Tassenleistung" erzielt werden. Durch das Auspressen des Kaffeepulvers in der Auspresszone 25 verbessert sich auch der Wirkungsgrad, indem für eine bestimmte Menge an Kaffeegetränk weniger Kaffeepulver bei zumindest gleicher Qualität benötigt wird. Schliesslich besteht ein weiterer Vorteil darin, dass die Wassermenge und insbesondere die pro Brühwasservolumen aufzubrühende Pulvermenge in einem sehr weiten Bereich frei wählbar ist, so dass die Stärke und die Qualität des fertigen Kaffeegetränks unabhängig von dessen Volumen variiert werden können. Es ist mit dieser Vorrichtung auch möglich, die Pulvermenge an die Wassermenge anzupassen, was insbesondere bei der Zubereitung von grossen Getränkeportion wesentliche Vorteile bietet.

Durch das kontinuierliche Bewegen des Kaffeepulvers wird zudem verhindert, dass sich Kanäle im Kaffeepulver bilden und hydraulische "Kurzschlüsse" aufgebaut werden können, was bekanntlich zu einer uneinheitlichen und unvollständigen Extrahierung des im Brühraum aufgenommenen Kaffeepulvers führen würde.

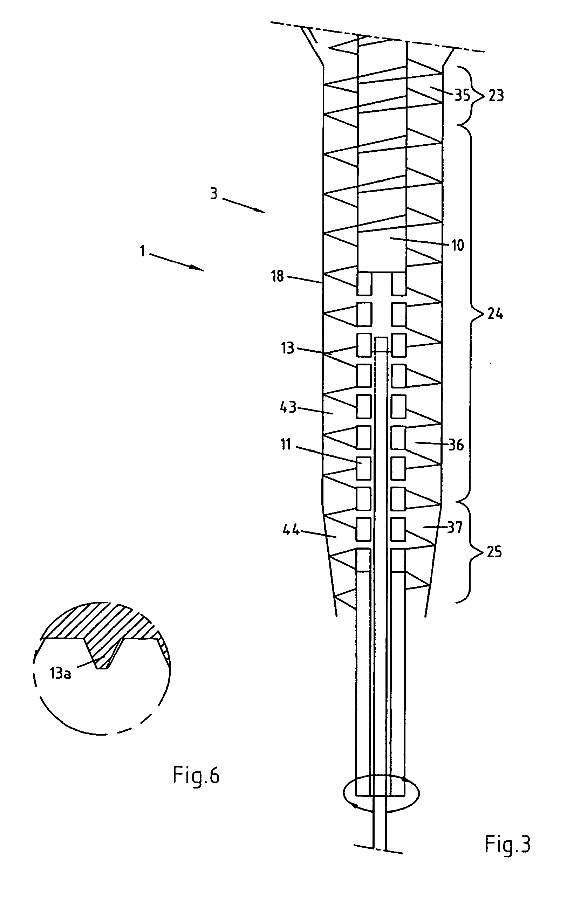

Fig. 3 zeigt eine nicht erfindungsgemässe Vorrichtung. Anstelle einer sich verringernden Steigung des Schneckenwellenflügels zur Bildung einer Abdichtzone verkleinert sich in diesem Beispiel der Raum 43, 44 zwischen dem Gehäuse 18 und dem Schneckenwellenkörper 11 im Bereich der Auspresszone 25. Konkret verringert sich der Durchmesser des die Schneckenwelle 10 umgebenden Gehäuses 18 im Bereich der Auspresszone 25 in Förderrichtung der Schneckenwelle 10. Es versteht sich, dass die Geometrie des Schneckenwellenflügels 13 in der Auspresszone 25 der Geometrie des konisch zulaufenden Gehäuses 18 angepasst ist. Durch das sich in Förderrichtung im Durchmesser konisch verkleinernde Gehäuse 18 wird die Substanz im Bereich der Auspresszone 25 wiederum derart verdichtet, dass der Extrakt ausgepresst wird. Die Steigung des Schneckenwellenflügels 13 zwischen der Brühzone 24 und der Auspresszone 25 muss in diesem Fall nicht variieren, sondern kann gleich bleiben. Ggf. kann die Steigung des Schneckenwellenflügels 13 jedoch auch bei dieser Ausführungsform verändert und an die gewünschten Anforderungen angepasst werden.

Anstelle einer konischen Verengung des Gehäuses 18 könnte auch der Durchmesser des Schneckenwellenkörpers 11 in Förderrichtung derart erweiternd ausgebildet werden, dass sich der Raum zwischen dem Gehäuse 18 und dem eigentlichen Schneckenwellenkörper 11 im Bereich der Auspresszone 25 wiederum verkleinert, auch wenn das Gehäuse zylindrisch ausgebildet ist.

Neben den bereits vorgängig genannten Betriebs-Parametern kann aber auch über weitere Vorrichtungs-Parameter Einfluss auf das zuzubereitende Heissgetränk genommen werden. Beispielsweise kann die absolute und/oder die relative Steigung des Schneckenflügels in den einzelnen Zonen bzw. zwischen den einzelnen Zonen variiert werden. Auch über die Länge der Brühzone sowie deren relevanter Durchmesser kann die Qualität des aufzubrühenden Heissgetränks beeinflusst werden.

Es versteht sich, dass die vorgängig beschriebene Vorrichtung lediglich beispielhaften Charakter besitzt und davon abweichende Ausführungsformen realisierbar sind. Beispielsweise könnte das Brühwasser von aussen nach innen in den Brühraum eingeleitet und das aufgebrühte Kaffeegetränk über den Hohlschaft des Schneckenwellenkörpers 11 oder eine darin aufgenommene Leitung abgeführt werden. Auch ein schräges Einleiten des Brühwasser in den Brühraum anstelle eines radialen Zuführens ist durchaus denkbar. Ebenso könnte der Brühraum konisch ausgebildet sein.

Die vorliegende Vorrichtung eignet sich insbesondere zur Zubereitung von Espressokaffee. Jedoch können damit natürlich auch andere Heissgetränke wie beispielsweise Tee, Suppen etc. zubereitet werden.

Alternativ zu dem vorgängig beschriebenen Ausführungsbeispiel, bei dem das Brühwasser mittels der Pumpe unter hohem Druck in die Brühzone eingeleitet wird, sind auch Ausführungsbeispiele von Vorrichtungen denkbar, die ohne Pumpe auskommen. Das Verdichten der partikelförmigen Substanz bzw. des Kaffeepulvers in der auslassseitigen Auspresszone eröffnet diesbezüglich neue Möglichkeiten, indem das Brühwasser der Brühzone nicht zwingend unter hohem Druck zugeführt werden muss, sondern lediglich sichergestellt werden muss, dass das Kaffeepulver beim Durchwandern der Brühzone vom eingeleiteten Brühwasser vollständig benetzt wird. In diesem Fall ist die Brühzone nicht zwingend diejenige Zone, in der das Kaffeepulver auch wirklich aufgebrüht und extrahiert wird, sondern unter dem Begriff Brühzone ist eine Zone zu verstehen ist, in der das Kaffeepulver von dem eingeleiteten heissen Brühwasser nur zumindest benetzt oder allenfalls teilextrahiert wird.

Wenn auf eine Pumpe zum zwangsweisen Zuführen des Brühwassers verzichtet wird, könnte anstelle der Pumpe beispielsweise ein steuerbares Ventil vorgesehen werden, mittels welchem die Brühwassereinleitung gestartet bzw. unterbrochen wird. Das Brühwasser könnte entweder der Schwerkraft folgend, aus einem oberhalb der Vorrichtung angeordneten Frischwasserbehälter zugeführt werden, oder die Vorrichtung bzw. der Wassererhitzer könnte direkt an eine Frischwasserleitung/Hauswasserleitung angeschlossen werden, so dass der ohnehin in der Frischwasserleitung vorherrschende Wasserdruck zum Zuführen des Brühwassers genutzt wird. Der eigentliche Extraktionsvorgang würde dann hauptsächlich in der Auspresszone stattfinden, wo durch Verdichten des Kaffeepulvers der flüssige Kaffeeextrakt aus dem Kaffeepulver ausgepresst würde. Ggf. könnte dieser flüssige Kaffeeextrakt, welcher hochkonzentriert ist, mittels Wasser verdünnt werden, um die gewünscht typische Konzentration des fertigen Kaffeegetränks zu erhalten. Die Verdünnung könnte allenfalls auch mit Wasser erfolgen, das etwa wie beim Filterkaffee drucklos durch den bereits ausgepressten Kaffeekuchen geleitet wird.

Ggf. kann auch der Förderdruck der Pumpe reduziert und gleichzeitig die Steigung des Schneckenflügels in Förderrichtung reduziert werden, so dass die Komprimierung des Kaffeepulvers in Förderrichtung zunimmt, was letztlich ebenfalls zu der gewünscht guten Extrahierung des Kaffeepulvers führt. Schliesslich kann die Vorrichtung auch batchweise oder quasi kontinuierlich betrieben werden, indem das Kaffeepulver in den Brühraum gefördert und die Schneckenwelle dann angehalten wird, so dass die Extraktion danach in der bekannten Weise erfolgt und das ausgelaugte Kaffeepulver als Kuchen ausgestossen wird. Im Gegensatz zu den nach dem Stand der Technik ausgebildeten, batchweise arbeitenden Vorrichtungen, bei denen die Zuführung des frischen Pulvers in entgegengesetzter Richtung zum Ausstossen des ausgelaugten Kuchens erfolgt, erfolgt bei der erfindungsgemässen Vorrichtung die Zuführung der partikelförmigen Substanz in die Brühzone hinein und aus dieser heraus jedoch in gleicher Richtung.

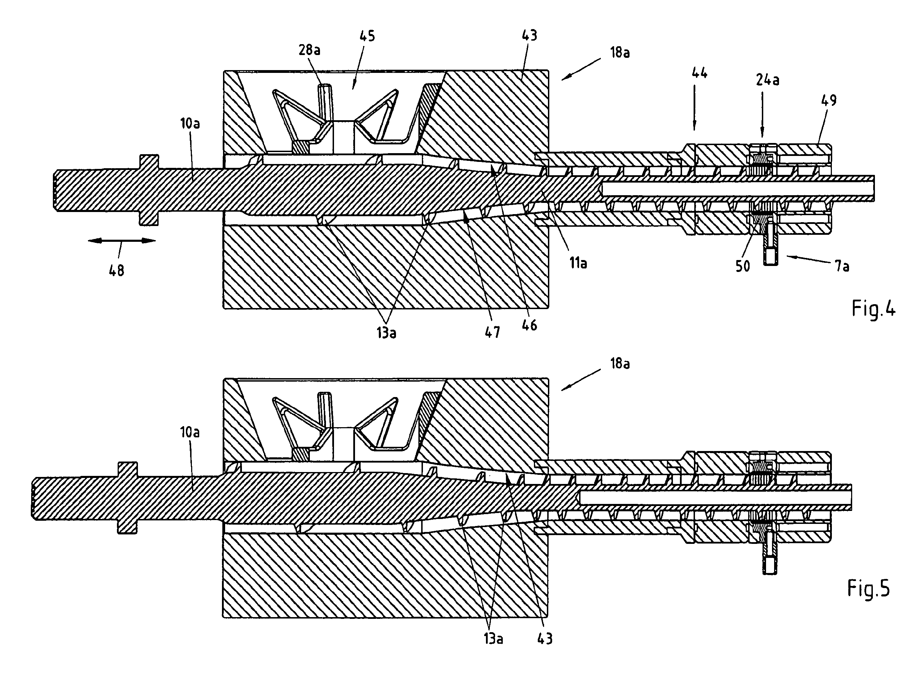

Die Fig. 4 zeigt eine nicht erfindungsgemäße Vorrichtung im Längsschnitt. Gegenüber dem vorgängigen Ausführungsbeispiel sind die Bezugszeichen gleicher oder ähnlicher Teile zusätzlich mit einem "a" versehen. Die Vorrichtung ist in diesem Fall horizontal angeordnet. Das Gehäuse 18a wird im vorliegenden Beispiel durch einen hinteren Gehäuseteil 43 sowie einen vorderen Gehäuseteil 44 gebildet. Der hintere Gehäuseteil ist als Gehäuseblock ausgebildet, während der vordere Gehäuseteil rohrförmig gestaltet ist und einen im Wesentlichen hohlzylindrisch gestalteten Innenraum aufweist. Der hintere Gehäuseteil 43 ist mit einem radialen Einlassbereich 45 für die Zufuhr des gemahlenen Kaffeepulvers versehen. In diesem radialen Einlassbereich 45 ist ein Rühr- und Abstreiforgan 28 angeordnet. Der hintere Gehäuseteil 43 ist im Anschluss an den Einlassbereich 45 mit einer sich in Förderrichtung der Schneckenwelle 10a konisch verengenden Einzugszone 46 versehen. Wie ersichtlich, weist die Schneckenwelle 10a einen der Kontur der Einzugszone 46 angepassten Einzugsbereich 47 auf, der sich in Förderrichtung ebenfalls konisch verengt. Die Schneckenwelle 10a ist in axialer Richtung relativ zum Gehäuse verschiebbar wie dies durch einen Doppelpfeil 48 angedeutet ist, wobei es grundsätzlich keine Rolle spielt, ob das Gehäuse, insbesondere der hintere Gehäuseteil 43, oder die Schneckenwelle 10a selber verschiebbar ausgebildet ist. In der Fig. 4 befindet sich die Schneckenwelle 10a in ihrer vordersten Position, in der zwischen der äusseren Mantelfläche des Schneckenflügels 13a und der Innenseite des Gehäuses 43 praktisch kein Radialspalt besteht. Der vordere Gehäuseteil 44 weist einen zum auslassseitigen Ende hin im Aussendurchmesser etwas vergrösserten Endbereich 49 auf. In diesem Endbereich 49 ist die Brühzone 24a angeordnet, von der ein Auslass 7a radial nach unten wegführt. Die Brühzone 24a ist mit einer Filtervorrichtung 50 versehen, die eine Vielzahl von Filterscheiben umfasst. Jede dieser Filterscheiben ist mit radial verlaufenden Schlitzen versehen, deren Querschnitt so gewählt ist, dass die einzelnen Partikel des gemahlenen Kaffees in der Brühzone 24a zurückgehalten werden. Anstelle einzelner Filterscheiben kann beispielsweise auch ein Federfilter eingesetzt werden, welches aus einem spiralförmigen Federelement besteht, bei dem die einzelnen Windungen aneinander zu liegen kommen und ebenfalls mit radialen Schlitzen versehen sind. Ggf. kann zwischen der Brühzone 24a und dem Auslass noch ein Druckregelventil eingefügt werden, welches erst bei einem vorbestimmten Überdruck öffnet.

Die Fig. 5 zeigt die Vorrichtung gemäss Fig. 4, wobei die Schneckenwelle 10a in axialer Richtung relativ zum Gehäuse 18a nach hinten verschoben wurde, so dass zwischen der äusseren Mantelfläche des Schneckenflügels 13a und der Innenseite des Gehäuses 43 ein Radialspalt besteht. Dadurch wird die Förderleistung im Einzugsbereich reduziert, was zur Folge hat, dass der Verdichtungsgrad des Kaffeepulvers in den nachfolgenden Zonen herabgesetzt wird. Durch ein axiales Verstellen der Schneckenwelle 10a in Relation zum Gehäuse 18a kann somit direkt Einfluss auf das aufzubrühende Getränk genommen werden. Der Verdichtungsgrad des Kaffeepulvers bestimmt die Höhe des Wasserdrucks, welcher über dem Filterkuchen abgebaut werden kann. Dies wiederum beeifnlusst dirket den Extraktionsgrad und somit die Farbe, den Geschmack sowie die Stärke des fertigen Kaffeegetränks.

Es versteht sich, dass anstelle einer axialen Verschiebbarkeit der Schneckenwelle 10a auch eine axiale Verschiebbarkeit des Gehäuses 18a realisiert werden kann, was letztlich zu dem gleichen Ergebnis führt.

Die gezeigte Ausführungsform der Schneckenwelle, bei der der Verdichtungsgrad des Kaffeepulvers mittels der Steigung des Schneckenflügels variiert wird, hat gegenüber anderen Varianten den Vorteil, dass keine toten Zonen entstehen, in welchen sich Kafffeepulverreste ablagern können bzw. welche vom Brühwasser nicht durchströmt werden. Durch die fliessenden Übergänge bei der diesseits vorgeschlagenen Lösung enstehen keine schlecht durchströmten Zonen, in welchen sich das Pulver ablagern kann. Zudem weist die Schneckenwelle eine gute Selbstreinigung auf.

Die Fig. 6 zeigt schliesslich eine bevorzugte Schneckenflügelgeometrie im Querschnitt und in vergrösserter Darstellung. Wie ersichtlich, weist der Schneckenflügel 13a einen trapezförmigen Querschnitt auf. Diese Geometrie optimiert die Verdichtung des Pulvers, indem eine zusätzliche Kraftkomponente entsteht, welche das Kaffeepulver nach aussen an die Innenseite des Gehäusemantels drückt. Dies vergrössert die Reibung am Mantel, was wiederum zu einer höheren Verdichtung des Pulvers führt und zudem die Selbstreinigung der Schneckenwelle begünstigt.

## Patentansprüche

1. Vorrichtung (1) zur Zubereitung von Heissgetränken durch Aufbrühen einer partikelförmigen, mittels Wasser extrahierbaren Substanz, mit einem Wassererhitzer (6), Mitteln (5) zum Zuführen von Brühwasser in eine Brühzone (24) sowie einem zumindest teilweise von einem Gehäuse (18) umschlossenes Förderorgan in Form einer mit zumindest einem Schneckenflügel (13) versehenen Schneckenwelle (10) zur Förderung der partikelförmigen Substanz durch die Brühzone (24) hindurch, wobei die Zuführung der partikelförmigen Substanz in die Brühzone (24) hinein und aus dieser heraus in gleicher Richtung erfolgt, und wobei die Vorrichtung eine der Brühzone (24) nachgeschaltete Auspresszone (25) aufweist, in der die Substanz verdichtet und dabei der Extrakt ausgepresst wird, **dadurch gekennzeichnet, dass** sich die Schneckenwelle (10) zumindest entlang der Brühzone (24) sowie der Auspresszone (25) erstreckt, und dass die Steigung des Schneckenflügels (13) im Bereich der Auspresszone (25) kleiner ist, als im Bereich der Brühzone (24).

2. Vorrichtung nach Anspruch 1, **dadurch gekennzeichnet, dass** die Vorrichtung eine der Brühzone (24) vorgeschaltete Abdichtzone (23) aufweist, entlang welcher sich die Schneckenwelle (10) erstreckt, und dass die Steigung des Schneckenflügels (13) im Bereich der Abdichtzone (23) kleiner ist, als im Bereich der Brühzone (24).

3. Vorrichtung nach Anspruch 1 oder 2, **dadurch gekennzeichnet, dass** die Steigung des Schneckenflügels (13) zur Schaffung der Dichtzone (23) mittels komprimierter Substanz bzw. zum Verdichten der Substanz in der Auspresszone (25) in axialer Richtung vor und nach der Brühzone (24) eine geringere Steigung aufweist als im Bereich der Brühzone (24).

4. Vorrichtung nach einem der vorhergehenden Ansprüche, **dadurch gekennzeichnet, dass** die Vorrichtung eine Einzugszone (46) aufweist, in der sich das die Schneckenwelle (10a) umschliessende Gehäuse (10a) konisch verengt, wobei die Schneckenwelle (10a) einen der Kontur der Einzugszone angepassten Einzugsbereich (47) aufweist.

5. Vorrichtung nach Anspruch 4, **dadurch gekennzeichnet, dass** die Schneckenwelle (10a) in axialer Richtung relativ zum Gehäuse (18a) verschiebbar ist, oder dass das Gehäuse (18a) in axialer Richtung relativ zur Schneckenwelle (10a) verschiebbar ist.

6. Vorrichtung nach einem der vorhergehenden Ansprüche, **dadurch gekennzeichnet, dass** die Steigung des Schneckenflügels (13) im Bereich der Auspresszone (25) derart gestaltet ist, dass die in der Brühzone vom Brühwasser benetzte oder teilextrahierte Substanz in der Auspresszone (25) extrahiert bzw. fertig extrahiert wird.

7. Vorrichtung nach einem der vorhergehenden Ansprüche, **dadurch gekennzeichnet, dass** in der Auspresszone (25) durch die Verdichtung der Substanz ein höherer hydrostatischer Druck herrscht, als in der Brühzone (24).

8. Vorrichtung nach einem der vorhergehenden Ansprüche, **dadurch gekennzeichnet, dass** die Brühzone (24) einen zumindest teilweise zylindrisch oder konisch ausgebildeten Brühraum .(36) umfasst, wobei die partikelförmige Substanz dem Brühraum (36) im wesentlichen axial zugeführt wird, während das Brühwasser (B) dem Brühraum (36) im wesentlichen radial zugeführt und/oder der flüssige Extrakt radial daraus abgeleitet wird.

9. Vorrichtung nach Anspruch 8, **dadurch gekennzeichnet, dass** die Schneckenwelle (10) als Hohlwelle ausgebildet ist und mit einem Innenraum (12) versehen ist, der über Durchlässe (14) mit der äusseren Mantelfläche der Schneckenwelle (10) verbunden ist.

10. Vorrichtung nach Anspruch 9, **dadurch gekennzeichnet, dass** die Schneckenwelle (10) entlang des Brühraums (36) mit einer Vielzahl von Durchlässen (14) versehen ist.

11. Vorrichtung nach Anspruch 9 oder 10, **dadurch gekennzeichnet, dass** der Innenraum (12) der Schneckenwelle (10) zum Zuführen von Brühwasser (B) oder zum Ableiten des flüssigen Extrakts aus dem Brühraum (36) ausgebildet ist.

12. Vorrichtung nach einem der Ansprüche 9 bis 11, **dadurch gekennzeichnet, dass** die Vorrichtung eine in den Innenraum (12) der Schneckenwelle (10) führende Brühwasserleitung (31) umfasst, die mit zumindest einem Auslass (33) versehen ist, über welche(n) Brühwasser (B) in den Innenraum (12) der Schneckenwelle (10) eingeleitet werden kann.

13. Vorrichtung nach Anspruch 12, **dadurch gekennzeichnet, dass** die Brühwasserleitung (31) in axialer Richtung relativ zu der Schneckenwelle (10) derart verstellbar ist, dass der Bereich der Brühwassereinleitung variierbar ist.

14. Vorrichtung nach einem der vorhergehenden Ansprüche, **dadurch gekennzeichnet, dass** die Schneckenwelle (10) derart von dem Gehäuse (18) umschlossen ist, dass in den unterschiedlichen Zonen (23, 24, 25) unterschiedliche Räume (35, 36, 37) entlang der Schneckenwelle (10) geschaffen werden, wobei in Förderrichtung der Schneckenwelle (10) vor dem Brühraum (36) zumindest ein einlassseitiger Abdichtraum (35), sowie nach dem Brühraum (36) zumindest ein auslassseitiger Auspressraum (37) geschaffen werden.

15. Vorrichtung nach einem der vorhergehenden Ansprüche, **dadurch gekennzeichnet, dass** die Auspresszone (25) gleichzeitig als auslassseitige Dichtzone ausgebildet ist.

16. Vorrichtung nach einem der Ansprüche 8 bis 15, **dadurch gekennzeichnet, dass** das Volumen des Brühraums (36) derart gewählt ist, dass nur ein Bruchteil der zur Zubereitung einer Getränkeportion benötigten Menge an Substanz darin aufgenommen werden kann.

17. Vorrichtung nach Anspruch 14, **dadurch gekennzeichnet, dass** das Volumen des Abdichtraums (35) kleiner ist als dasjenige des Brühraums (36).

18. Vorrichtung nach einem der vorhergehenden Ansprüche, **dadurch gekennzeichnet, dass** im Bereich der Auspresszone (25) ein Sammelabschnitt (39) zum Auffangen des in der Auspresszone (25) extrahierten flüssigen Getränkeextrakts angeordnet ist, wobei der Sammelabschnitt (39) mit einem Getränkeauslass (7) verbunden ist.

19. Vorrichtung nach einem der vorhergehenden Ansprüche, **dadurch gekennzeichnet, dass** der Schneckenflügel (13a) einen im wesentlichen trapezförmigen Querschnitt besitzt.

20. Verfahren zur Zubereitung von Heissgetränken, insbesondere von Kaffee oder Tee, durch Aufbrühen einer partikelförmigen, mittels Wasser extrahierbaren Substanz in einer Brühzone (24), wobei die Substanz mittels einer mit zumindest einem Schneckenflügel (13) versehenen Schneckenwelle (10) durch die Brühzone (24) hindurch gefördert wird und die Zuführung der partikelförmigen Substanz in die Brühzone (24) hinein und aus dieser heraus in gleicher Richtung erfolgt, und wobei die partikelförmige Substanz nach der Brühzone (24) in eine Auspresszone (25) gefördert wird, **dadurch gekennzeichnet, dass** die partikelförmige Substanz in der Auspresszone (25) in axialer Richtung durch die sich verringernde Steigung des Schneckenflügels (13) verdichtet und dabei der Extrakt ausgepresst wird.

21. Verfahren nach Anspruch 20, **dadurch gekennzeichnet, dass** die Substanz vor der Brühzone (24) durch eine Dichtzone (23) gefördert wird, in der sie verdichtet wird.

22. Verfahren nach Anspruch 20 oder 21, **dadurch gekennzeichnet, dass** die Substanz zur Zubereitung einer Getränkeportion kontinuierlich durch die Brühzone (24) hindurch gefördert wird.

23. Verfahren nach einem der Ansprüche 20 bis 22, **dadurch gekennzeichnet, dass** das Brühwasser derart in die Brühzone (24) eingeleitet wird, dass die Substanz (K) vom Brühwasser im wesentlich quer zu ihrer Förderrichtung durchströmt wird.

24. Verfahren nach einem der Ansprüche 20 bis 23, **dadurch gekennzeichnet, dass** die Substanz vor und/oder nach der Brühzone (24, 24a) derart stark verdichtet wird, dass sie in axialer Richtung als Abdichtung für das unter Druck in die Brühzone (24, 24a) eingeleitete Brühwasser wirkt.

25. Verfahren nach einem der Ansprüche 20 bis 24, **dadurch gekennzeichnet, dass** die Förderleistung des die Substanz durch die Brühzone (24, 24a) hindurch fördernden Förderorgans (10, 10a) veränderbar ist.

26. Verfahren nach Anspruch 25, **dadurch gekennzeichnet, dass** das Arbeitsvermögen des Förderorgans (10a) durch axiales Verschieben des Förderorgans (10a) in Relation zum Gehäuse (18a) verändert wird.

27. Verfahren nach einem der Ansprüche 20 bis 26, **dadurch gekennzeichnet, dass** der Bereich der Zuführung des Brühwassers in axialer Richtung verstellbar ist.

28. Verfahren nach einem der Ansprüche 20 bis 27, **dadurch gekennzeichnet, dass** das Brühwasser der Brühzone (24) weitgehend drucklos zugeführt wird.

29. Verfahren nach einem der Ansprüche 20 bis 28, **dadurch gekennzeichnet, dass** das Brühwasser der Brühzone (24) unter einem Druck von 5 bis 20 bar zugeführt wird.

30. Verwendung einer nach einem der Ansprüche 1 bis 19 ausgebildeten Vorrichtung zur Herstellung von Kaffee, insbesondere von Espressokaffee.

## Claims

1. Apparatus (1) for preparing hot beverages by brewing a particulate substance which can be extracted using water, having a water heater (6), means (5) for feeding brewing water to a brewing zone (24), and a conveyor element, which is at least partially surrounded by a housing (18), in the form of a screw shaft (10), which is provided with at least one screw flight (13), for conveying the particulate substance through the brewing zone (24), with the particulate substance being fed to the brewing zone (24) and out of said brewing zone in the same direction, and with the apparatus having an extraction zone (25) which is connected downstream of the brewing zone (24) and in which the substance is compacted and the extract is extracted in the process, **characterized in that** the screw shaft (10) extends at least along the brewing zone (24) and the extraction zone (25), and **in that** the pitch of the screw flight (13) in the region of the extraction zone (25) is smaller than in the region of the brewing zone (24).

2. Apparatus according to Claim 1, **characterized in that** the apparatus has a sealing-off zone (23) which is connected upstream of the brewing zone (24), and the screw shaft (10) extends along the said sealing-off zone, and **in that** the pitch of the screw flight (13) in the region of the sealing-off zone (23) is smaller than in the region of the brewing zone (24).

3. Apparatus according to Claim 1 or 2, **characterized in that** the pitch of the screw flight (13) for creating the sealing zone (23) by means of a compressed substance or to compact the substance in the extraction zone (25) is smaller in the axial direction upstream and downstream of the brewing zone (24) than in the region of the brewing zone (24).

4. Apparatus according to one of the preceding claims, **characterized in that** the apparatus has an intake zone (46) in which the housing (18a) which surrounds the screw shaft (10a) tapers conically, with the screw shaft (10a) having an intake region (47) which is matched to the contour of the intake zone.

5. Apparatus according to Claim 4, **characterized in that** the screw shaft (10a) can be moved in the axial direction relative to the housing (18a), or **in that** the housing (18a) can be moved in the axial direction relative to the screw shaft (10a).

6. Apparatus according to one of the preceding claims, **characterized in that** the pitch of the screw flight (13) in the region of the extraction zone (25) is configured in such a way that the substance which is wetted or partially extracted by the brewing water in the brewing zone is extracted or completely extracted in the extraction zone (25).

7. Apparatus according to one of the preceding claims, **characterized in that** a higher hydrostatic pressure prevails in the extraction zone (25) than in the brewing zone (24) on account of the substance being compacted.

8. Apparatus according to one of the preceding claims, **characterized in that** the brewing zone (24) comprises an at least partially cylindrical or conical brewing area (36), with the particulate substance being fed to the brewing area (36) in a substantially axial manner, while the brewing water (B) is fed to the brewing area (36) in a substantially radial manner and/or the liquid extract is discharged from the said brewing area in a radial manner.

9. Apparatus according to Claim 8, **characterized in that** the screw shaft (10) is in the form of a hollow shaft and is provided with an internal area (12) which is connected to the outer casing surface of the screw shaft (10) by means of through-passages (14).

10. Apparatus according to Claim 9, **characterized in that** the screw shaft (10) is provided with a large number of through-passages (14) along the brewing area (36).

11. Apparatus according to Claim 9 or 10, **characterized in that** the internal area (12) in the screw shaft (10) is designed to feed brewing water (B) to or to discharge the liquid extract from the brewing area (36).

12. Apparatus according to one of Claims 9 to 11, **characterized in that** the apparatus comprises a brewing water line (31) which leads into the internal area (12) in the screw shaft (10) and which is provided with at least one outlet (33) by means of which brewing water (B) can be introduced into the internal area (12) in the screw shaft (10).

13. Apparatus according to Claim 12, **characterized in that** the brewing water line (31) can be adjusted in the axial direction relative to the screw shaft (10) in such a way that the region in which brewing water is introduced can be varied.

14. Apparatus according to one of the preceding claims, **characterized in that** the screw shaft (10) is surrounded by the housing (18) in such a way that different areas (35, 36, 37) are created along the screw shaft (10) in the different zones (23, 24, 25), with at least one inlet-end sealing-off area (35) being created upstream of the brewing area (36) and at least one outlet-end extraction area (37) being created downstream of the brewing area (36), in the conveying direction of the screw shaft (10).

15. Apparatus according to one of the preceding claims, **characterized in that** the extraction zone (25) is simultaneously in the form of an outlet-end sealing zone.

16. Apparatus according to one of Claims 8 to 15, **characterized in that** the volume of the brewing area (36) is selected in such a way that only a fraction of the quantity of substance required to prepare a beverage portion can be accommodated in the said brewing area.

17. Apparatus according to Claim 14, **characterized in that** the volume of the sealing-off area (35) is smaller than that of the brewing area (36).

18. Apparatus according to one of the preceding claims, **characterized in that** a collection section (39) for capturing the liquid beverage extract extracted in the extraction zone (25) is arranged in the region of the extraction zone (25), with the collection section (39) being connected to a beverage outlet (7).

19. Apparatus according to one of the preceding claims, **characterized in that** the screw flight (13a) has a substantially trapezoidal cross section.

20. Method for preparing hot beverages, in particular tea or coffee, by brewing a particulate substance which can be extracted using water in a brewing zone (24), with the substance being conveyed through the brewing zone (24) by means of a screw shaft (10), which is provided with at least one screw flight (13), and the particulate substance being fed to the brewing zone (24) and out of the said brewing zone in the same direction, and with the particulate substance being conveyed into an extraction zone (25) downstream of the brewing zone (24), **characterized in that** the particulate substance in the extraction zone (25) is compacted in the axial direction by the decreasing pitch of the screw flight (13) and the extract is extracted in the process.

21. Method according to Claim 20, **characterized in that** the substance is conveyed through a sealing zone (23), in which it is compacted, upstream of the brewing zone (24).

22. Method according to Claim 20 or 21, **characterized in that** the substance for preparing a beverage portion is continuously conveyed through the brewing zone (24).

23. Method according to one of Claims 20 to 22, **characterized in that** the brewing water is introduced into the brewing zone (24) in such a way that the brewing water flows through the substance (K) substantially transverse to the conveying direction of said substance.

24. Method according to one of Claims 20 to 23, **characterized in that** the substance is so highly compacted upstream and/or downstream of the brewing zone (24, 24a) that it acts as a seal for the brewing water, which is introduced into the brewing zone (24, 24a) under pressure, in the axial direction.

25. Method according to one of Claims 20 to 24, **characterized in that** the conveyor power of the conveyor element (10, 10a) which conveys the substance through the brewing zone (24, 24a) can be varied.

26. Method according to Claim 25, **characterized in that** the performance of the conveyor element (10a) is varied by moving the conveyor element (10a) axially in relation to the housing (18a).

27. Method according to one of Claims 20 to 26, **characterized in that** the region in which the brewing water is fed can be adjusted in the axial direction.

28. Method according to one of Claims 20 to 27, **characterized in that** the brewing water is fed to the brewing zone (24) largely without pressure.

29. Method according to one of Claims 20 to 28, **characterized in that** the brewing water is fed to the brewing zone (24) under a pressure of 5 to 20 bar.

30. Use of an apparatus designed according to one of Claims 1 to 19 for producing coffee, in particular espresso coffee.

## Revendications

1. Dispositif (1) de préparation de boissons chaudes par infusion d'une substance sous forme de particules pouvant être extraite au moyen d'eau, avec un chauffe-eau (6), des moyens (5) d'alimentation d'eau chaude dans une zone d'infusion (24) ainsi qu'un organe de transport entouré au moins partiellement par un boîtier (18) sous la forme d'un arbre de vis sans fin (10) doté d'au moins une hélice (13) pour le transport de la substance sous forme de particules à travers la zone d'infusion (24), l'alimentation de la substance sous forme de particules dans la zone d'infusion (24) et hors de celle-ci se faisant dans la même direction, et le dispositif présentant une zone de pressage (25) placée en aval de la zone d'infusion (24), dans laquelle la substance est compactée et l'extrait est pressé ce faisant, **caractérisé en ce que** l'arbre de vis sans fin (10) s'étend au moins le long de la zone d'infusion (24) ainsi que de la zone de pressage (25) et **en ce que** le pas de l'hélice de vis (13) au niveau de la zone de pressage (25) est plus petit qu'au niveau de la zone d'infusion (24).

2. Dispositif selon la revendication 1, **caractérisé en ce que** le dispositif présente une zone d'étanchéité (23) placée en amont de la zone d'infusion (24), le long de laquelle s'étend l'arbre de vis sans fin (10) et **en ce que** le pas de l'hélice de vis (13) au niveau de la zone d'étanchéité (23) est plus petit qu'au niveau de la zone d'infusion (24).

3. Dispositif selon la revendication 1 ou 2, **caractérisé en ce que** le pas de l'hélice de vis (13) pour la création de la zone étanche (23) au moyen d'une substance comprimée et/ou pour le compactage de la substance dans la zone de pressage (25) dans la direction axiale avant et après la zone d'infusion (24) présente un pas plus petit qu'au niveau de la zone d'infusion (24).

4. Dispositif selon l'une quelconque des revendications précédentes, **caractérisé en ce que** le dispositif présente une zone d'introduction (46) dans laquelle le boîtier (10a) entourant l'arbre de vis sans fin (10a) se rétrécit de manière conique, l'arbre de vis sans fin (10a) présentant un secteur d'introduction (47) adapté au contour de la zone d'introduction.

5. Dispositif selon la revendication 4, **caractérisé en ce que** l'arbre de vis sans fin (10a) peut être déplacé dans la direction axiale par rapport au boîtier (18a) ou **en ce que** le boîtier (18a) peut être déplacé dans la direction axiale par rapport à l'arbre de vis sans fin (10a).

6. Dispositif selon l'une quelconque des revendications précédentes, **caractérisé en ce que** le pas de l'hélice de vis (13) au niveau de la zone de pressage (25) est réalisé de telle sorte que la substance partiellement extraite ou mouillée dans la zone d'infusion par l'eau chaude est extraite ou complètement extraite dans la zone de pressage (25).

7. Dispositif selon l'une quelconque des revendications précédentes, **caractérisé en ce qu'**il y a dans la zone de pressage (25) une pression hydrostatique plus élevée que dans la zone d'infusion (24) en raison du compactage de la substance.

8. Dispositif selon l'une quelconque des revendications précédentes, **caractérisé en ce que** la zone d'infusion (24) comprend un compartiment d'infusion (36) réalisé de manière au moins partiellement cylindrique ou conique, la substance sous forme de particules étant amenée de manière essentiellement axiale au compartiment d'infusion (36), alors que l'eau chaude (B) est amenée de manière essentiellement radiale au compartiment d'infusion (36) et/ou l'extrait liquide en est dérivé radialement.

9. Dispositif selon la revendication 8, **caractérisé en ce que** l'arbre de vis sans fin (10) est réalisé sous forme d'arbre creux et est doté d'un espace intérieur (12), qui est relié à la surface de l'enveloppe extérieure de l'arbre de vis sans fin (10) par le biais de passages (14).

10. Dispositif selon la revendication 9, **caractérisé en ce que** l'arbre de vis sans fin (10) est doté le long du compartiment d'infusion (36) d'une pluralité de passages (14).

11. Dispositif selon la revendication 9 ou 10, **caractérisé en ce que** l'espace intérieur (12) de l'arbre de vis sans fin (10) est réalisé pour l'alimentation d'eau chaude (B) ou pour la dérivation de l'extrait liquide du compartiment d'infusion (36).

12. Dispositif selon l'une quelconque des revendications 9 à 11, **caractérisé en ce que** le dispositif comprend une conduite d'eau chaude (31) conduisant dans l'espace intérieur (12) de l'arbre de vis sans fin (10), qui est dotée d'au moins une sortie (33) par le biais de laquelle (desquelles) l'eau chaude (B) peut être introduite dans l'espace intérieur (12) de l'arbre de vis sans fin (10).

13. Dispositif selon la revendication 12, **caractérisé en ce que** la conduite d'eau chaude (31) peut être déplacée dans la direction axiale par rapport à l'arbre de vis sans fin (10) de telle sorte que le secteur de la conduite d'eau chaude est modifiable.

14. Dispositif selon l'une quelconque des revendications précédentes, **caractérisé en ce que** l'arbre de vis sans fin (10) est entouré par le boîtier (18) de telle sorte que différents compartiments (35, 36, 37) sont créés le long de l'arbre de vis sans fin (10) dans les différentes zones (23, 24, 25), au moins un compartiment d'étanchéité (35) côté entrée étant créé en amont du compartiment d'infusion (36) dans le sens de transport de l'arbre de vis sans fin (10) et au moins un compartiment de pressage (37) côté sortie étant créé en aval du compartiment d'infusion (36).

15. Dispositif selon l'une quelconque des revendications précédentes, **caractérisé en ce que** la zone de pressage (25) est réalisée en même temps sous forme de zone étanche côté sortie.

16. Dispositif selon l'une quelconque des revendications 8 à 15, **caractérisé en ce que** le volume du compartiment d'infusion (36) est sélectionné de telle sorte que seule une fraction de la quantité de substance nécessaire à la préparation d'une dose de boisson peut y être reçue.

17. Dispositif selon la revendication 14, **caractérisé en ce que** le volume du compartiment d'étanchéité (35) est plus petit que celui du compartiment d'infusion (36).

18. Dispositif selon l'une quelconque des revendications précédentes, **caractérisé en ce qu'**une partie collectrice (39) pour le recueil de l'extrait de boisson liquide extrait dans la zone de pressage (25) est disposée au niveau de la zone de pressage (25), la partie collectrice (39) étant reliée à une sortie de boisson (7).

19. Dispositif selon l'une quelconque des revendications précédentes, **caractérisé en ce que** l'hélice de vis (13a) possède une section transversale essentiellement trapézoïdale.

20. Procédé de préparation de boissons chaudes, notamment de café ou de thé, par infusion d'une substance sous forme de particules pouvant être extraite avec de l'eau dans une zone d'infusion (24), dans lequel la substance est transportée à travers la zone d'infusion (24) au moyen d'un arbre de vis sans fin (10) doté d'au moins une hélice de vis (13) et l'alimentation de la substance sous forme de particules dans la zone d'infusion (24) et hors de celle-ci se fait dans la même direction, et dans lequel la substance sous forme de particules est transportée en aval de la zone d'infusion (24) dans une zone de pressage (25), **caractérisé en ce que** la substance sous forme de particules est compactée dans la zone de pressage (25) dans la direction axiale par le pas de l'hélice (13) qui diminue et l'extrait est pressé ce faisant.

21. Procédé selon la revendication 20, **caractérisé en ce que** la substance est transportée avant la zone d'infusion (24) par une zone étanche (23), dans laquelle elle est compactée.

22. Procédé selon la revendication 20 ou 21, **caractérisé en ce que** la substance est transportée en continu à travers la zone d'infusion (24) pour la préparation d'une dose de boisson.

23. Procédé selon l'une quelconque des revendications 20 à 22, **caractérisé en ce que** l'eau chaude est introduite dans la zone d'infusion (24) de telle sorte que la substance (K) est traversée par l'eau chaude de manière essentiellement transversale à son sens de transport.

24. Procédé selon l'une quelconque des revendications 20 à 23 **caractérisé en ce que** la substance avant et/ou après la zone d'infusion (24, 24a) est compactée si fortement qu'elle agit dans la direction axiale comme élément d'étanchéité pour l'eau chaude introduite sous pression dans la zone d'infusion (24, 24b).

25. Procédé selon l'une quelconque des revendications 20 à 24, **caractérisé en ce que** la capacité de transport de l'organe de transport (10, 10a) transportant la substance à travers la zone d'infusion (24, 24a) est modifiable.

26. Procédé selon la revendication 25, **caractérisé en ce que** le potentiel de travail de l'organe de transport (10a) est modifié par déplacement axial de l'organe de transport (10a) par rapport au boîtier (18a).

27. Procédé selon l'une quelconque des revendications 20 à 26, **caractérisé en ce que** le secteur de l'alimentation de l'eau chaude est déplaçable dans la direction axiale.

28. Procédé selon l'une quelconque des revendications 20 à 27, **caractérisé en ce que** l'eau chaude est amenée largement sans pression à la zone d'infusion (29).

29. Procédé selon l'une quelconque des revendications 20 à 28, **caractérisé en ce que** l'eau chaude est amenée à la zone d'infusion (24) sous une pression de 5 à 20 bar.

30. Utilisation d'un dispositif, réalisé selon l'une quelconque des revendications 1 à 19, pour la préparation de café, en particulier d'expresso.
